# EUROPEAN PATENT SPECIFICATION

(11) **EP 2 843 733 B1**
(45) Date of publication and mention of the grant of the patent: **17.05.2017**
(21) Application number: 14181916.9
(22) Date of filing: 22.08.2014
(51) Int. Cl.: H01M 4/02, H01M 4/13, H01M 4/131, H01M 4/36, H01M 4/62, H01M 2/36, H01M 4/139, H01M 10/052

(54) **Electrode for rechargeable lithium battery and rechargeable lithium battery including the same**
Elektrode für wiederaufladbare Lithiumbatterie und wiederaufladbare Lithiumbatterie damit
Électrode pour batterie rechargeable au lithium-ion et batterie rechargeable au lithium-ion l'incluant

(30) Priority: 03.09.2013 US 201361873031 P; 17.01.2014 US 201414157610
(43) Date of publication of application: 04.03.2015
(73) Proprietor: Samsung SDI Co., Ltd., Yongin-si, Gyeonggi-do 449-577 (KR)
(72) Inventor: Lee, Jin-Hyon, Yongin-si, Gyeonggi-do (KR); Sohn, Ju-Hee, Yongin-si, Gyeonggi-do (KR); Won, Jung-Yeon, Yongon-si, Gyeonggi-do (KR); Goh, Eun-Yong, Yongin-si, Gyeonggi-do (KR); Lee, Jong-Ki, Yongin-si, Gyeonggi-do (KR); Park, Sang-In, Yongin-si, Gyeonggi-do (KR)
(74) Representative: Ludwig, Ingo

(56) References cited:
- EP-A2- 1 184 918
- EP-A2- 1 282 179
- WO-A1-01/97304
- WO-A1-2012/159111
- WO-A1-2013/062177
- WO-A2-2007/111895
- US-A- 5 665 491
- US-A1- 2005 084 758
- US-A1- 2007 026 316
- US-A1- 2011 168 550
- US-A1- 2012 003 544
- US-A1- 2013 101 902
- US-A1- 2013 149 605
- US-B2- 6 890 685
- US-B2- 7 202 000

## Description

### BACKGROUND

### 1. Field

The invention relates to an electrode for a rechargeable battery, in particular a rechargeable lithium battery, and a rechargeable battery, in particular a rechargeable lithium battery, including the same.

### 2. Description of the Related Art

In recent times, due to reductions in size and weight of a portable electronic equipment, there has been a need to develop rechargeable lithium batteries for the portable electronic equipment having both high performance and large capacity.

Such a rechargeable lithium battery is manufactured by injecting an electrolyte into a battery cell, which includes a positive electrode including a positive active material capable of intercalating/deintercalating lithium ions and a negative electrode including a negative active material capable of intercalating/deintercalating lithium ions. Rechargeable lithium batteries are disclosed in US 5,665,491, US 2012/003544 A1, US 2013/101902 A1, WO 2012/159111 A1 and US,6 890,685 B2.

In order to realize a rechargeable lithium battery having large capacity, an electrode is mainly formed by coating a thick electrode active material layer on a current collector. However, when the electrode becomes thick, lithium ions may not smoothly move inside the electrode and thus, performance of the rechargeable lithium battery may be deteriorated.

Thus, it is an object of the invention to provide a rechargeable battery with a large capacity and a high performance.

### SUMMARY

This object is solved for the electrode mentioned in the beginning by the features of claim 1 and for a battery mentioned in the beginning by the features claim 13.

Due to the electrolyte solution impregnation layer, a high electrical current can be conducted from the active material to a consumer or from a source of electrical current connected to the battery to the active material. The maximum electrical current that can be conducted is greater than the maximum electrical current that can be conducted from or to an active material with the same capacity due to the electrolyte solution impregnation layer.

Furthermore, the electrode according to the invention has excellent cycle-life and output characteristics, since an electrolyte solution is smoothly supplied within and impregnated into the electrode even though the electrode is thick.

The solutions according to the invention can be combined as desired and further improved by the further following embodiments that are advantages on their own, in each case.

The electrolyte solution impregnation layer may be arranged closer to the current collector than an external surface of the electrode, e.g. the external surface may be an external surface of the electrode active material layer. The electrolyte solution can be better distributed compared to other positions of the electrolyte solution impregnation layer, which improves the mobility of lithium ions inside and increases the maximum current that can be conducted by the electrode.

Two electrode active material layers may be provided, namely a first electrode active material layer and a second electrode active material layer, wherein the electrolyte solution impregnation layer is arranged between the first electrode active material layer and the second electrode active material layer. The two electrode active material layers may have the same thickness. Preferably, the two electrode active material layers have different thicknesses. For instance, the thickness of the first electrode active material layer may be less than the thickness of the thickness of the second electrode active material layer.

Placing the electrolyte solution impregnation layer between the two electrode active material layers further improves the movability of the lithium ions. The maximum current may further rise towards a maximum current, that can be conducted by an electrode having only one of the electrode active material layers. Providing the two electrode active material layers with different thicknesses enables an adaptation of the electrode and therefore of the battery to an aspired capacity and an aspired performance at the same time.

The first electrode active material layer is preferably arranged between the current collector and the electrolyte solution impregnation layer. In particular if the thickness of the first electrode active material layers is less than the thickness of the second active material layer, the performance can be increased. In case a high current is required, this high current can be supplied by the thinner first electrode active material layer. Via the electrolyte solution impregnation layer, ions can be swiftly supplied from the second electrode active material layer, namely at a rate at which an electrode active material layer of the thickness of the second electrode active material layer alone can be supplied.

The conductive material may be arranged on a surface of the metal oxide. Thus, current conducted by the conductive material does not need to pass through the metal oxide, which would increase electrical resistance. For instance, the metal oxide may be provided as metal oxide particles, which may be small particles or even nano particles. The conductive material can be arranged between the metal oxide particles. Alternatively or additionally, the conductive material can be arranged on a and even cover a surface of a plurality or of all of the metal oxide particles.

The metal oxide preferably comprises Al₂O₃, TiO₂, CeO₂, ZnO₂, ZrO₂, V₂O₅, HfO₂, MnO₂, MgO, WO₂ or a combination thereof, which are highly conductive for lithium ions and chemically stable, such that the electrolyte solution does not affect the metal oxide or vice versa.

The conductive material preferably comprises a carbon-based material, a metal, or a combination thereof, which is highly conductive for electrochemically stable, such that the electrolyte solution does not affect the conductive material or vice versa.

The conductive material may be included in the electrolyte solution impregnation layer in an amount of between 5 portions by weight and 10 portions by weight, based on 100 portions by weight of the metal oxide. A thickness of the electrolyte solution impregnation layer is between 0.2 % and 20 % of a total thickness of the electrode. A total thickness of the active material layer and the electrolyte solution impregnation layer is between 50 µm and 300 µm. The electrolyte solution impregnation layer preferably has a different composition than the active material layer.

The metal oxide may provide at least one pathway for movement of lithium ions, and the conductive material provides a pathway for movement of electrons.

The conductive material may be included in a structure surrounding at least a part of surface of the metal oxide.

The conductive material may comprise or even consists of the carbon-based material, e.g. of carbon nanotube, a carbon nanofiber, carbon black, acetylene black, ketjen black, graphene, or a combination thereof; the metal may comprise or even consists of Cu, Al, Ni, Ag, Au or combination thereof.

Other embodiments are included in the following detailed description.

In particular, a thick electrode can be smoothly supplied with an electrolyte solution and impregnated therewith and may realize a rechargeable lithium battery having excellent cycle-life and output characteristics.

In summary, in an electrode including a current collector and an electrode active material layer coated on the current collector, the electrode active material may not readily be impregnated by an electrolyte solution having hydrophilicity due to hydrophobicity of the electrode active material such as graphite and the like or a conductive material. Also, even though the electrolyte solution may be impregnated through vacuum injection, the electrolyte solution may flow out again due to affinity difference of the electrolyte solution to the electrode active material or the conductive material as time goes by and thus, form a concentration gradient inside the electrode. This phenomenon may become severe in a high-capacity electrode which becomes thick.

An electrode for a rechargeable lithium battery according to one embodiment includes a current collector and an electrode plate layer disposed on the current collector, wherein the electrode plate layer includes at least one electrode active material layer and electrolyte solution impregnation layer. In other words, the electrolyte solution impregnation layer having excellent impregnation capability of an electrolyte solution is included inside the electrode plate layer and thus, electrolyte solution may be smoothly supplied into the electrode and impregnation of the electrolyte solution is improved. Accordingly, the electrolyte solution impregnation layer may ease mobility of lithium ions inside the thick high-capacity electrode (or called to be a 'thick film electrode') and thus, improve cycle-life and output characteristics of a rechargeable lithium battery.

Specifically, the electrolyte solution impregnation layer inside the electrode plate layer may be positioned closer to the current collector than the external surface of the electrode plate layer. When the electrolyte solution impregnation layer is much closer to the current collector in the electrode plate layer, a concentration gradient due to difficult impregnation of an electrolyte solution may become minimized. In other words, when the electrolyte solution impregnation layer is positioned close to the current collector in the electrode plate layer, an electrolyte solution may be smoothly supplied and impregnated and thus, ease mobility of lithium ions inside an electrode.

In addition, the two electrode active material layers may be provided, e.g. a first electrode active material layer and a second electrode active material layer, and the electrolyte solution impregnation layer may be interposed between the first electrode active material layer and the second electrode active material layer. Herein, the first electrode active material layer and the second electrode active material layer may have the same thickness or different thicknesses.

The electrode active material layer may include an electrode active material, and the electrolyte solution impregnation layer may include a metal oxide and a conductive material.

The conductive material may be included or arranged on the surface of the metal oxide and specifically, surrounding at least a part of the surface of the metal oxide.

The metal oxide may ease movement of lithium ions and speed up this movement, and in addition, the electrode active material layer is electrically connected through the conductive material. In other words, the electrolyte solution impregnation layer provides for a high electric conductivity of electrons and lithium ions and can be excellently impregnated or soaked or even saturated by of an electrolyte solution and thus, may minimize a concentration gradient of lithium ions inside an electrode and improve cycle-life and output characteristics of a rechargeable lithium battery.

### BRIEF DESCRIPTION OF THE DRAWINGS

FIG. 1 is a schematic view showing a structure of an electrode for a rechargeable lithium battery according to one embodiment.
FIG. 2 is a schematic view showing a rechargeable lithium battery according to one embodiment.
FIG. 3 is a graph showing cycle-life characteristics of the rechargeable lithium battery cells according to examples 1 to 3 and comparative examples 1 and 2.
FIG. 4 is a graph showing high-rate charge and discharge characteristics of the rechargeable lithium battery cells according to examples 1 to 3 and comparative examples 1 and 2.

### DETAILED DESCRIPTION

The invention is described hereinafter in grater detail and in an exemplary manner using advantageous embodiments and with reference to the drawings. The described embodiments are only possible configurations in which, however, individual features as described can be provided and combined independently of one another or can be omitted in the drawings.

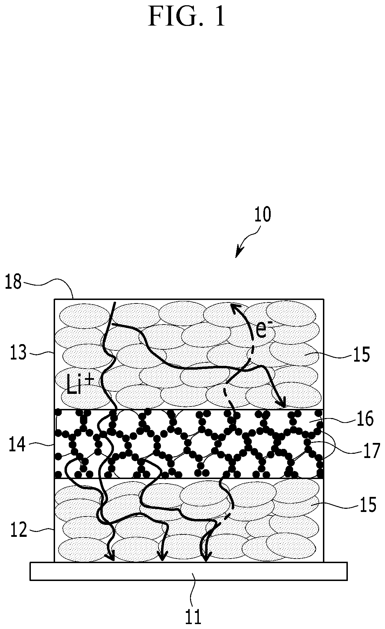

The electrode for a rechargeable lithium battery is specifically described referring to FIG. 1.

FIG. 1 is a schematic view showing a structure of an electrode for a rechargeable lithium battery according to one embodiment.

Referring to FIG. 1, an electrode for a rechargeable lithium battery 10 according to one embodiment includes a current collector 11 and an electrode plate layer positioned on the current collector 11, wherein the electrode plate layer includes a first electrode active material layer 12, a second electrode active material layer 13, and an electrolyte solution impregnation layer 14 interposed between the first electrode active material layer 12 and the second electrode active material layer 13. The first and second electrode active material layers 12, 13 respectively include an electrode active material 15, and the electrolyte solution impregnation layer 14 may include a metal oxide 16, which may be provided in form of particles, and a conductive material 17 surrounding at least a part of the surface of the metal oxide 16.

In addition, FIG. 1 shows movement of lithium ions Li⁺ and electrons e⁻. The lithium ions Li⁺ move from the external surface 18 of the electrode plate layer through the metal oxide 16 near to the current collector 11, and the electrons e⁻ move through the conductive material 17.

The metal oxide 16 may include Al₂O₃, TiO₂, CeO₂, ZnO₂, ZrO₂, V₂O₅, HfO₂, MnO₂, MgO, WO₂ or a combination thereof.

The conductive material 17 may include a carbon-based material of carbon nanotube, a carbon nanofiber, carbon black, acetylene black, ketjen black, graphene, or a combination thereof; a metal of Cu, Al, Ni, Ag, Au or combination thereof; or a combination thereof.

The conductive material 17 is included in an amount of 5 to 10 parts by weight based on 100 parts by weight of the metal oxide 16. When the conductive material 17 is included within this range, an electrolyte solution impregnation layer 14 may secure excellent impregnation by an electrolyte solution and high electric conductivity and accordingly, may ease movement of lithium ions Li⁺ inside the electrode 10 and realize a rechargeable lithium battery having excellent cycle-life and output characteristics. The first and second electrode active material layers 12, 13 may have the same thickness or different thicknesses. The first electrode active material layer 12 is positioned on the current collector 11 as shown in FIG. 1, the first electrode active material layer 12 may have a smaller thickness than the second electrode active material layer 13. In other words, the electrolyte solution impregnation layer 14 is positioned closer to the current collector 11 than the external surface 18 of the electrode plate layer, e.g. of the second electrode active material layer 13.

According to one embodiment, a thickness of the electrode plate layer may be 50 to 300 µm, and specifically 100 to 200 µm. When the electrode plate layer has a thickness within this range, a rechargeable lithium battery having high-capacity may be realized.

A thickness of the electrolyte solution impregnation layer 14 may be 0.2 to 20 %, and specifically 0.2 to 10 % of a thickness of the electrode including the current collector 11 and the electrode plate layer. When the electrolyte solution impregnation layer 14 has a thickness within this range, movement of lithium ions Li⁺ becomes easy.

The electrode active material layer 12, 13 includes an electrode active material 15, and may additionally include at least one of a binder and a conductive material.

The electrode active material 15 may be any positive active material and negative active material for a rechargeable lithium battery.

Specifically the positive active material may be a compound (lithiated intercalation compound) being capable of intercalating and deintercalating lithium, and may be, for example a compound represented by one of the following chemical formulae.

LiₐA_{1-b}B_{b}D₂ (wherein, in the above chemical formula, 0.90 ≤ a ≤ 1.8 and b ≤ 0.5); LiₐE_{1-b}B_{b}O_{2-c}D_{c} (wherein, in the above chemical formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above chemical formula, 0 ≤ b ≤ 0.5, 0 ≤ c ≤ 0.05); LiₐNi_{1-b-c}Co_{b}B_{c}D_{α} (wherein, in the above chemical formula, 0.90 ≤ a ≤ 1.8, 0 ≤ b ≤ 0.5, 0 ≤ c ≤ 0.05, 0 ≤ α ≤ 2); LiₐNi_{1-b-c}Co_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Co_{b}B_{c}O_{2-α}F₂ (wherein, in the above chemical formula, 0.90 ≤ a ≤ 1.8, 0 ≤ b ≤ 0.5, 0 ≤ c ≤ 0.05,0 < α < 2); LiₐNi_{1-b-c}Mn_{b}B_{c}D_{α} (wherein, in the above chemical formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein, in the above chemical formula, 0.90 ≤ a ≤ 1.8, 0 ≤ b ≤ 0.5, 0 ≤ c ≤ 0.05,0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GeO₂ (wherein, in the above chemical formula, 0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein, in the above chemical formula, 0.90 ≤ a ≤ 1.8, 0.001 ≤ b ≤ 0.1); LiₐCoG_{b}O₂ (wherein, in the above chemical formula, 0.90 ≤ a ≤ 1.8, 0.001 ≤ b ≤ 0.1); LiₐMnG_{b}O₂ (wherein, in the above chemical formula, 0.90 ≤ a ≤ 1.8, 0.001 ≤ b ≤ 0.1); LiₐMn₂G_{b}O₄ (wherein, in the above chemical formula, 0.90 ≤ a ≤ 1.8, 0.001 ≤ b ≤ 0.1); QO₂; QS₂; LiOS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The negative active material may be a material that reversibly intercalates/deintercalates lithium ions Li⁺, a lithium metal, a lithium metal alloy, a material being capable of doping and dedoping lithium, or a transition metal oxide.

The material that reversibly intercalates/deintercalates lithium ions Li⁺ may be a carbon material which is any generally-used carbon-based negative active material rechargeable lithium battery, and examples thereof may be crystalline carbon, amorphous carbon, or a mixture thereof. Examples of the crystalline carbon may be graphite such as amorphous, sheet-shape, flake, spherical shape or fiber-shaped natural graphite or artificial graphite, and examples of the amorphous carbon may be soft carbon (low temperature fired carbon) or hard carbon, a mesophase pitch carbonized product, fired coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may be Si, SiOₓ (0<x<2), a Si-C composite, a Si-Y alloy (wherein Y is an element selected from an alkali metal, an alkaline-earth metal, Group 13 to 16 elements, a transition metal, a rare earth element, and a combination thereof, and not Si), Sn, SnO₂, a Sn-C composite, Sn-Y (wherein Y is an element selected from an alkali metal, an alkaline-earth metal, Group 13 to 16 elements, a transition metal, a rare earth element and a combination thereof, and not Sn), and the like, and at least one of these may be mixed with SiO₂. The element, Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po and a combination thereof.

The transition metal oxide may be vanadium oxide, lithium vanadium oxide, and the like.

The binder improves binding properties of the electrode active material 15 and the acrylonitrile-based resin with each other, and the electrode active material 15 with the current collector 11, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive agent improves conductivity of the electrode 10, any electrically conductive agent may be used as a conductive agent, unless it causes a chemical change, and examples thereof may be a carbon-based material such as natural graphite, artificial graphite, carbon black, acetylene black, ketjen black, a carbon fiber, and the like; a metal-based material of a metal powder or a metal fiber and the like of copper, nickel, aluminum, silver, and the like; a conductive polymer such as a polyphenylene derivative and the like; or a mixture thereof.

One of the electrode active material layers 12, 13 may be formed on the current collector 11. The current collector 11 may be aluminum, a copper foil, a nickel foil, a stainless steel foil, a titanium foil, a nickel foam, a copper foam, a polymer substrate coated with a conductive metal, or a combination thereof, but is not limited thereto.

The electrode 10 may be manufactured by applying the electrode plate layer composition on the current collector 11, and drying and compressing the same.

Specifically, the electrode 10 having the structure of FIG. 1 may be manufactured as follows:
At first, the electrode active material layer 12 is formed on the current collector 11 by coating and drying a first electrode active material layer composition. Then, the electrolyte solution impregnation layer 14 is formed on the first electrode active material layer 12. Subsequently, the second electrode active material layer 13 is formed on the electrolyte solution impregnation layer 14 by coating and drying a second electrode active material layer composition. This electrode plate layer on the current collector 11 is compressed, forming an electrode for a rechargeable lithium battery.

In addition, an electrode 10 for a rechargeable lithium battery may be manufactured by coating a first electrode active material layer composition on the current collector 11, coating an electrolyte solution impregnation layer composition thereon, and coating a second electrode active material layer composition thereon and then, drying and compressing them to form an electrode plate layer, that includes the first electrode active material layer 12, the electrolyte solution impregnation layer 14, and the second electrode active material layer 13 on the current collector 11.

Furthermore, a first electrode active material layer composition, an electrolyte solution impregnation layer composition, and a second electrode active material layer composition may be simultaneously coated in a slot die coating method and then, dried and compressed on the current collector 11 to form an electrode plate layer sequentially including the first electrode active material layer 12, the electrolyte solution impregnation layer 14, and the second electrode active material layer 13, providing the electrode 10 including the electrode plate layer for a rechargeable lithium battery.

The electrode 10 may be used as at least one of a positive electrode and a negative electrode in a rechargeable lithium battery.

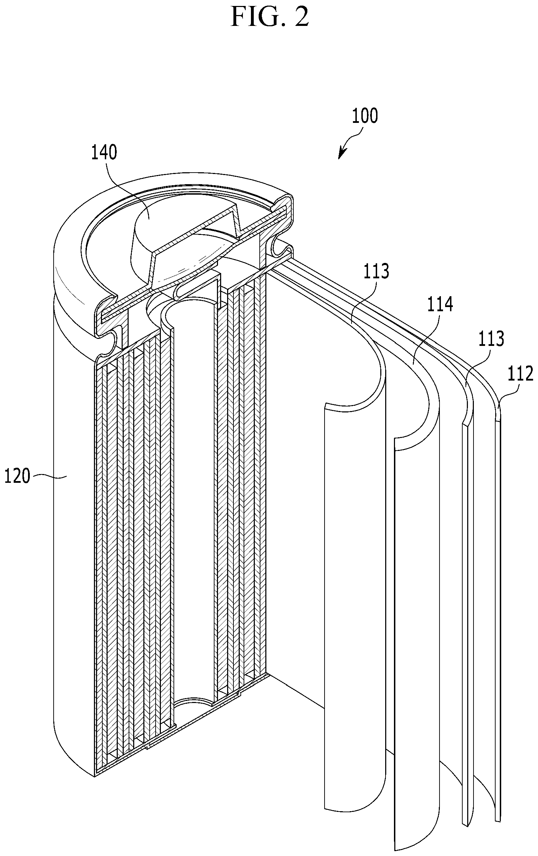

Hereinafter, a rechargeable lithium battery including the electrode 10 of the previous exemplary embodiment is described referring to FIG. 2.

Referring to FIG. 2, a rechargeable lithium battery 100 according to one embodiment includes an electrode assembly including a positive electrode 114, a negative electrode 112 facing the positive electrode 114, a separator 113 interposed between the positive electrode 114 and negative electrode 112, and an electrolyte solution (not shown) impregnated into the positive electrode 114, the negative electrode 112, and the separator 113, a battery case 120 housing the electrode assembly, and a sealing member 140 sealing the battery case 120.

At least one of the positive electrode 114 and the negative electrode 112 may be the above electrode 10.

The electrolyte solution includes a non-aqueous organic solvent and a lithium salt.

The non-aqueous organic solvent serves as a medium for transmitting ions Li⁺ taking part in the electrochemical reaction of the battery 100. The non-aqueous organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

Particularly, when the linear carbonate compounds and cyclic carbonate compounds are mixed, an organic solvent having a high dielectric constant and low viscosity can be provided. The cyclic carbonate and the linear carbonate are mixed together in a volume ratio ranging from about 1:1 to 1:9.

In addition, the ester-based solvent may be, for example methylacetate, ethylacetate, n-propylacetate, dimethylacetate, methylpropionate, ethylpropionate, γ-butyrolactone, decanolide, valerolactone, mevalonolactone, caprolactone, and the like. The ether solvent may be, for example dibutylether, tetraglyme, diglyme, dimethoxyethane, 2-methyltetrahydrofuran, tetrahydrofuran, and the like, and the ketone-based solvent may be cyclohexanone, and the like. In addition, the alcohol-based solvent may be ethanol, isopropyl alcohol, and the like.

The non-aqueous organic solvent may be used singularly or in a mixture, and when the organic solvent is used in a mixture, the mixture ratio may be controlled in accordance with a desirable battery performance.

The electrolyte solution may further include an overcharge inhibitor additive such as ethylenecarbonate, pyrocarbonate, or the like.

The lithium salt is dissolved in an organic solvent, supplies lithium ions in a battery, basically operates the rechargeable lithium battery, and improves lithium ion transportation between the positive and negative electrodes 112, 114 therein.

Specific examples of the lithium salt may be LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, LiCl, Lil, LiB(C₂O₄)₂ (lithium bis(oxalato) borate, LiBOB), or a combination thereof.

The lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

The separator 113 may include any materials commonly used in the conventional lithium battery 100 as long as separating the negative electrode 112 from the positive electrode 114 and providing a transporting passage for lithium ions Li⁺ is assured. In other words, the separator 113 may have a low resistance to ion transportation and an excellent impregnation for an electrolyte. For example, it may be selected from glass fiber, polyester, TEFLON (tetrafluoroethylene), polyethylene, polypropylene, polytetrafluoroethylene (PTFE), or a combination thereof and may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator 113 including a ceramic component or a polymer material may be used. Selectively, it may have a mono-layered or multi-layered structure.

Hereinafter, the embodiments are disclosed in more detail with reference to examples.

### Example 1

First and second negative active material layer compositions were respectively prepared by mixing 98 wt% of natural graphite, 1 wt% of carboxylmethyl cellulose (CMC), and 1 wt% of a styrene-butadiene rubber (SBR) and dispersing the mixture into water.

An electrolyte solution impregnation layer composition was prepared by mixing 100 parts by weight of Al₂O₃ and 10 parts by weight of carbon black based on 100 parts by weight of the Al₂O₃.

The first negative active material layer composition, the electrolyte solution impregnation layer composition, and the second negative active material layer composition were simultaneously coated on a 15 µm-thick copper foil in a slot die coating method and dried and compressed to sequentially form a first negative active material layer 12, an electrolyte solution impregnation layer 14, and a second negative active material layer 13 on the copper foil, manufacturing a negative electrode. Herein, the first negative active material layer 12 was 50 µm thick, the electrolyte solution impregnation layer 14 was 5 µm thick, and the second negative active material layer 13 was 100 µm thick.

The negative electrode and a lithium metal as a counter electrode were housed in the battery case 120, and an electrolyte solution was injected into the battery case 120, manufacturing a rechargeable lithium battery 100 that may be designated as battery cell.

Herein, the electrolyte solution was prepared by mixing ethylenecarbonate (EC), diethylcarbonate (DEC), and fluoroethylenecarbonate (FEC) in a volume ratio of 5:70:25 and dissolving 1.15M LiPF₆ in the mixed solution.

### Example 2

A rechargeable lithium battery 100 that may be designated as battery cell was manufactured according to the same method as Example 1 except for forming the first, e.g. negative, active material layer 12 to be 70 µ m thick, the electrolyte solution impregnation layer 14 to be 3 µm thick, and the second, e.g. negative, active material layer 13 to be 80 µm thick to manufacture a negative electrode.

### Example 3

A rechargeable lithium battery 100, e.g. a battery cell was manufactured according to the same method as Example 1 except for using an electrolyte solution impregnation layer composition prepared by mixing 100 parts by weight of CeO₂ and 10 parts by weight of carbon black based on 100 parts by weight of the CeO₂ instead of the electrolyte solution impregnation layer in Example 1.

### Comparative Example 1

A rechargeable lithium battery 100, e.g. a battery cell was manufactured according to the same method as Example 1 except for preparing a negative active material layer composition by mixing 98 wt% of natural graphite, 1 wt% of carboxylmethyl cellulose, and 1 wt% of a styrene-butadiene rubber and dispersing the mixture into water, coating the negative active material layer composition on a 15 µm-thick copper foil and then, drying and compressing it to manufacture a negative electrode.

### Comparative Example 2

A rechargeable lithium battery 100, e.g. a battery cell, was manufactured according to the same method as Example 1 except for preparing a negative active material layer composition by mixing 97 wt% of natural graphite, 1 wt% of carboxylmethyl cellulose, 1 wt% of a styrene-butadiene rubber and 1 wt% of Al₂O₃ and dispersing the mixture into water, coating the negative active material layer composition on a 15 µm-thick copper foil and then, drying and compressing it to manufacture a negative electrode.

### Evaluation 1: Electrical Conductivity and Ionic Conductivity

Electrical conductivity and ionic conductivity of the negative electrode manufactured according to examples 1 to 3 and comparative examples 1 and 2 were measured, and the results are provided in Table 1.

**[Table 1]**

| | Electrical conductivity (S/m) | Ionic conductivity (mS/cm²) |
|---|---|---|
| Example 1 | 4.2 | 5.6 |
| Example 2 | 4.6 | 3.4 |
| Example 3 | 3.9 | 5.1 |
| Comparative Example 1 | 6 | 0.05 |
| Comparative Example 2 | 5.2 | 1.5 |

Referring to Table 1, examples 1 to 3 including an electrolyte solution impregnation layer 14 including the metal oxide 16 and the conductive material 17 in an electrode plate layer regardless of the electrode active material layer 14 showed lower electrical conductivity and higher ionic conductivity compared with comparative example 1 including no electrolyte solution impregnation layer 14 and comparative example 2 including a mixture of metal oxide 16 and the electrode active material in the electrode plate layer.

### Evaluation 2: Cycle-Life Characteristics

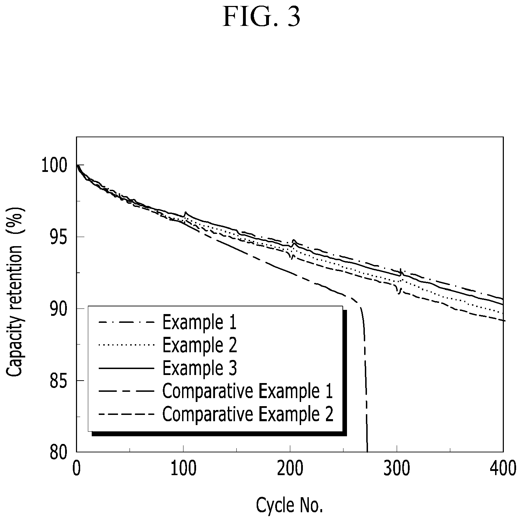

The rechargeable lithium batteries 100, e.g. battery cells manufactured according to examples 1 to 3 and comparative examples 1 and 2 were charged at 0.7C and discharged at 0.5C within a range of 2.8V to 4.2V, then, their cycle-life characteristics were measured, and the results are provided in FIG. 3. The unit C is used to signify a charge or discharge rate equal to the capacity of a battery divided by 1 hour. Thus, for example, C for a 1600 mAh battery would be 1.6 A, C/5 for the same battery would be 320 mA and C/10 would be 160 mA. Because C is dependent on the capacity of a battery, the C rate for batteries of different capacities must also be different.

FIG. 3 depicts a graph showing cycle-life characteristics of the rechargeable lithium batteries 100 or cells according to examples 1 to 3 and comparative examples 1 and 2.

Referring to FIG. 3, examples 1 to 3 including the electrolyte solution impregnation layer 14 including the metal oxide 16 and the conductive material 17 in the electrode plate layer regardless of the electrode active material layers 12, 13 showed excellent cycle-life characteristic compared with comparative example 1 including no electrolyte solution impregnation layer 14 and comparative example 2 including a mixture of the metal oxide 16 and the electrode active material in an electrode plate layer. The reason is that the electrolyte solution impregnation layer 14 was present inside the electrode plate layer, thus, smoothly supplied an electrolyte solution inside an electrode 10 and improved impregnation by the electrolyte solution, and resultantly, eased mobility of lithium ions Li⁺ inside the electrode 10 even though the electrode 10 was thick.

### Evaluation 3: Output Characteristics

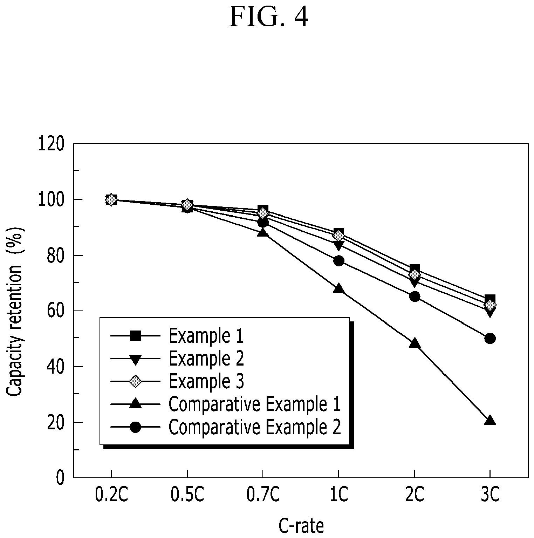

The rechargeable lithium batteries or cells 100 according to examples 1 to 3 and comparative examples 1 and 2 were charged at 0.2C within a range of 2.8V to 4.2V and discharged respectively at 0.2C, 0.5C, 0.7C, 1C, 2C, and 3C, their high rate discharge characteristics were measured, and the results are provided in FIG. 4.

FIG. 4 depicts a graph showing high-rate charge and discharge characteristics of the rechargeable lithium battery cells 100 according to examples 1 to 3 and comparative examples 1 and 2.

Referring to FIG. 4, examples 1 to 3 including an electrolyte solution impregnation layer 14 including the metal oxide 16 and the conductive material 17 in an electrode plate layer regardless of the electrode active material layer 14 showed excellent output characteristics compared with comparative example 1 including no electrolyte solution impregnation layer 14 and comparative example 2 including a mixture of metal oxide 16 and the electrode active material in the electrode plate layer. The reason is that the electrolyte solution impregnation layer 14 was present in the electrode plate layer, smoothly supplies the electrolyte solution in the electrode, improves impregnation by the electrolyte solution, and resultantly eases mobility of lithium ions Li⁺ inside the electrode 10 even through the electrode 10 was thick.

## Claims

1. An electrode for a rechargeable battery, comprising a current collector and an electrode active material layer, wherein the electrode comprises an electrolyte solution impregnation layer, which includes a metal oxide and a conductive material, wherein two electrode active material layers are provided, namely a first electrode active material layer and a second electrode active material layer, wherein the electrolyte solution impregnation layer is arranged between the first electrode active material layer and the second electrode active material layer, and wherein the first electrode active material layer is positioned on the current collector, **characterized in that** the conductive material is included in the electrolyte solution impregnation layer in an amount of 5 parts by weight to 10 parts by weight, based on 100 parts by weight of the metal oxide.

2. The electrode as claimed in claim 1, **characterized in that** the electrolyte solution impregnation layer is closer to the current collector than an external surface of the electrode.

3. The electrode as claimed in claim 1, **characterized in that** the first electrode active material layer is arranged between the current collector and the electrolyte solution impregnation layer.

4. The electrode as claimed in any of claims 1 to 3, **characterized in that** the first electrode active material layer has a thickness different from that of the second electrode active material layer.

5. The electrode as claimed in claim 4, **characterized in that** the thickness of the first electrode active material layer is smaller than the thickness of the second electrode active material layer.

6. The electrode as claimed in any of claims 1 to 5, **characterized in that** the conductive material is arranged on a surface of the metal oxide.

7. The electrode as claimed in any of claims 1 to 6, **characterized in that** the metal oxide comprises Al₂O₃, TiO₂, CeO₂, ZnO₂, ZrO₂, V₂O₅, HfO₂, MnO₂, MgO, WO₂ or a combination thereof.

8. The electrode as claimed in any of claims 1 to 7, **characterized in that** the conductive material comprises a carbon-based material, a metal, or a combination thereof.

9. The electrode as claimed in any of claims 1 to 8, **characterized in that** a thickness of the electrolyte solution impregnation layer is between 0.2 % and 20 % of a total thickness of the electrode.

10. The electrode as claimed in any of claims 1 to 9, **characterized in that** a total thickness of the active material layer and the electrolyte solution impregnation layer is between 50 µm and 300 µm.

11. The electrode as claimed in any of claims 1 to 10, **characterized in that** the electrolyte solution impregnation layer has a different composition than the active material layer.

12. The electrode as claimed in any of claims 1 to 11, **characterized in that** the metal oxide provides a pathway for movement of lithium ions, and the conductive material provides a pathway for movement of electrons.

13. Rechargeable battery, comprising an electrode, **characterized in that** the electrode is an electrode according to any of claims 1 to 12.

## Patentansprüche

1. Eine Elektrode für eine wiederaufladbare Batterie, aufweisend einen Stromkollektor und eine Elektrodenaktivmaterialschicht, wobei die Elektrode eine Elektrolytlösungs-Imprägnierungsschicht, die ein Metalloxid und ein leitendes Material aufweist, aufweist, wobei zwei Elektrodenaktivmaterialschichten, nämlich eine erste Elektrodenaktivmaterialschicht und eine zweite Elektrodenaktivmaterialschicht, bereitgestellt werden, wobei die Elektrolytlösungs-Imprägnierungsschicht zwischen der ersten Elektrodenaktivmaterialschicht und der zweiten Elektrodenaktivmaterialschicht angeordnet ist, und wobei die erste Elektrodenaktivmaterialschicht auf dem Stromkollektor positioniert ist, **dadurch gekennzeichnet, dass** das leitende Material in der Elektrolytlösungs-Imprägnierungsschicht in einer Menge von 5 Gewichtsteilen bis 10 Gewichtsteilen, bezogen auf 100 Gewichtsteile des Metalloxids, enthalten ist.

2. Die Elektrode wie in Anspruch 1 beansprucht, **dadurch gekennzeichnet, dass** die Elektrolytlösungs-Imprägnierungsschicht näher am Stromkollektor als eine Außenfläche der Elektrode ist.

3. Die Elektrode wie in Anspruch 1 beansprucht, **dadurch gekennzeichnet, dass** die erste Elektrodenaktivmaterialschicht zwischen dem Stromkollektor und der Elektrolytlösungs-Imprägnierungsschicht angeordnet ist.

4. Die Elektrode wie in einem der Ansprüche 1 bis 3 beansprucht, **dadurch gekennzeichnet, dass** die erste Elektrodenaktivmaterialschicht eine Dicke, die sich von der der zweiten Elektrodenaktivmaterialschicht unterscheidet, aufweist.

5. Die Elektrode wie in Anspruch 4 beansprucht, **dadurch gekennzeichnet, dass** die Dicke der ersten Elektrodenaktivmaterialschicht kleiner als die Dicke der zweiten Elektrodenaktivmaterialschicht ist.

6. Die Elektrode wie in einem der Ansprüche 1 bis 5 beansprucht, **dadurch gekennzeichnet, dass** das leitende Material auf einer Oberfläche des Metalloxids angeordnet ist.

7. Elektrode wie in einem der Ansprüche 1 bis 6 beansprucht, **dadurch gekennzeichnet, dass** das Metalloxid Al₂O₃, TiO₂, CeO₂, ZnO₂, ZrO₂, V₂O₅, HfO₂, MnO₂, MgO, WO₂ oder eine Kombination derselben aufweist.

8. Die Elektrode wie in einem der Ansprüche 1 bis 7 beansprucht, **dadurch gekennzeichnet, dass** das leitende Material ein Material auf Kohlenstoffbasis, ein Metall oder eine Kombination derselben aufweist.

9. Die Elektrode wie in einem der Ansprüche 1 bis 8 beansprucht, **dadurch gekennzeichnet, dass** eine Dicke der Elektrolytlösungs-Imprägnierungsschicht zwischen 0,2 % und 20 % einer Gesamtdicke der Elektrode ist.

10. Die Elektrode wie in einem der Ansprüche 1 bis 9 beansprucht, **dadurch gekennzeichnet, dass** eine Gesamtdicke der Aktivmaterialschicht und der Elektrolytlösungs-Imprägnierungsschicht zwischen 50 µm und 300 µm ist.

11. Die Elektrode wie in einem der Ansprüche 1 bis 10 beansprucht, **dadurch gekennzeichnet, dass** die Elektrolytlösungs-Imprägnierungsschicht eine andere Zusammensetzung als die Aktivmaterialschicht aufweist.

12. Die Elektrode wie in einem der Ansprüche 1 bis 11 beansprucht, **dadurch gekennzeichnet, dass** das Metalloxid einen Weg für die Bewegung von Lithiumionen bereitstellt und das leitende Material einen Weg für die Bewegung von Elektronen bereitstellt.

13. Wiederaufladbare Batterie, aufweisend eine Elektrode, **dadurch gekennzeichnet, dass** die Elektrode eine Elektrode nach einem der Ansprüche 1 bis 12 ist.

## Revendications

1. Électrode pour une batterie rechargeable, comprenant un collecteur de courant et une couche de matériau actif d'électrode, l'électrode comprenant une couche d'imprégnation de solution électrolytique qui renferme un oxyde métallique et un matériau conducteur, dans laquelle deux couches de matériaux actifs d'électrode sont fournies, notamment une première couche de matériau actif d'électrode et une seconde couche de matériau actif d'électrode, dans laquelle la couche d'imprégnation de solution électrolytique est disposée entre la première couche de matériau actif d'électrode et la seconde couche de matériau actif d'électrode, et dans laquelle la première couche de matériau actif d'électrode est placée sur le collecteur de courant, **caractérisée en ce que** le matériau conducteur est compris dans la couche d'imprégnation de solution électrolytique en une quantité de 5 parties en poids à 10 parties en poids, sur la base de 100 parties en poids d'oxyde métallique.

2. Électrode selon la revendication 1, **caractérisée en ce que** la couche d'imprégnation de solution électrolytique est plus proche du collecteur de courant que d'une surface externe de l'électrode.

3. Électrode selon la revendication 1, **caractérisée en ce que** la première couche de matériau actif d'électrode est disposée entre le collecteur de courant et la couche d'imprégnation de solution électrolytique.

4. Électrode selon l'une quelconque des revendications 1 à 3, **caractérisée en ce que** la première couche de matériau actif d'électrode possède une épaisseur différente de celle de la seconde couche de matériau actif d'électrode.

5. Électrode selon la revendication 4, **caractérisée en ce que** l'épaisseur de la première couche de matériau actif d'électrode est plus faible que l'épaisseur de la seconde couche de matériau actif d'électrode.

6. Électrode selon l'une quelconque des revendications 1 à 5, **caractérisée en ce que** le matériau conducteur est disposé sur une surface de l'oxyde métallique.

7. Électrode selon l'une quelconque des revendications 1 à 6, **caractérisée en ce que** l'oxyde métallique comprend Al₂O₃, TiO₂, CeO₂, ZnO₂, ZrO₂, V₂O₅, HfO₂, MnO₂, MgO, WO₂ ou une combinaison de ceux-ci.

8. Électrode selon l'une quelconque des revendications 1 à 7, **caractérisée en ce que** le matériau conducteur comprend un matériau à base de carbone, un métal ou une combinaison de ceux-ci.

9. Électrode selon l'une quelconque des revendications 1 à 8, **caractérisée en ce qu'**une épaisseur de la couche d'imprégnation de solution électrolytique est comprise entre 0,2 % et 20 % d'une épaisseur totale de l'électrode.

10. Électrode selon l'une quelconque des revendications 1 à 9, **caractérisée en ce qu'**une épaisseur totale de la couche de matériau actif et de la couche d'imprégnation de solution électrolytique est comprise entre 50 µm et 300 µm.

11. Électrode selon l'une quelconque des revendications 1 à 10, **caractérisée en ce que** la couche d'imprégnation de solution électrolytique a une composition différente de celle de la couche de matériau actif.

12. Électrode selon l'une quelconque des revendications 1 à 11, **caractérisée en ce que** l'oxyde métallique fournit un trajet pour le déplacement des ions lithium, et le matériau conducteur fournit un trajet pour le déplacement des électrons.

13. Batterie rechargeable comprenant une électrode, **caractérisée en ce que** l'électrode est une électrode selon l'une quelconque des revendications 1 à 12.
